Europäisches Patentamt

European Patent Office

Office européen des brevets

(11) Publication number: **0 089 197**
**B1**

(12) **EUROPEAN PATENT SPECIFICATION**

(45) Date of publication of patent specification: **25.11.87**

(51) Int. Cl.⁴: **G 11 B 9/06, G 11 B 3/12**

(21) Application number: **83301356.8**

(22) Date of filing: **11.03.83**

(54) **Video disc reproducing apparatus.**

(30) Priority: **12.03.82 JP 39819/82**
**15.03.82 JP 41269/82**

(43) Date of publication of application:
**21.09.83 Bulletin 83/38**

(45) Publication of the grant of the patent:
**25.11.87 Bulletin 87/48**

(84) Designated Contracting States:
**DE FR GB**

(56) References cited:
**EP-A-0 035 192**
**DE-A-2 749 617**
**GB-A-2 073 934**
**US-A-3 623 734**
**US-A-3 830 505**

**Patent Abstracts of Japan vol. 6, no. 30, 23
February 1982 & JP-A-56-148703**

(73) Proprietor: **Matsushita Electric Industrial Co.,
Ltd.**
**1006, Oaza Kadoma**
**Kadoma-shi Osaka-fu, 571 (JP)**

(72) Inventor: **Tomita, Masao**
**Higashi-2-102 271-2, Uchiage**
**Neyagawa-shi Osaka-fu (JP)**
Inventor: **Takeuchi, Akihiro**
**128-37, Tsukimi-cho Higashi-Ikoma**
**Ikoma-shi Nara-ken (JP)**
Inventor: **Tomita,Akio,**
**35-6, Koata-Mizutori Oaza-Takigi Tanabe-cho**
**Tsuzuki-gun Kyoto-fu (JP)**

(74) Representative: **Crawford, Andrew Birkby et al
A.A. THORNTON & CO. Northumberland House
303-306 High Holborn
London WC1V 7LE (GB)**

## Description

This invention relates to a video disc reproducing apparatus provided with a pickup means by which the information recorded on a video disc is detected as a variation in electrostatic capacitance.

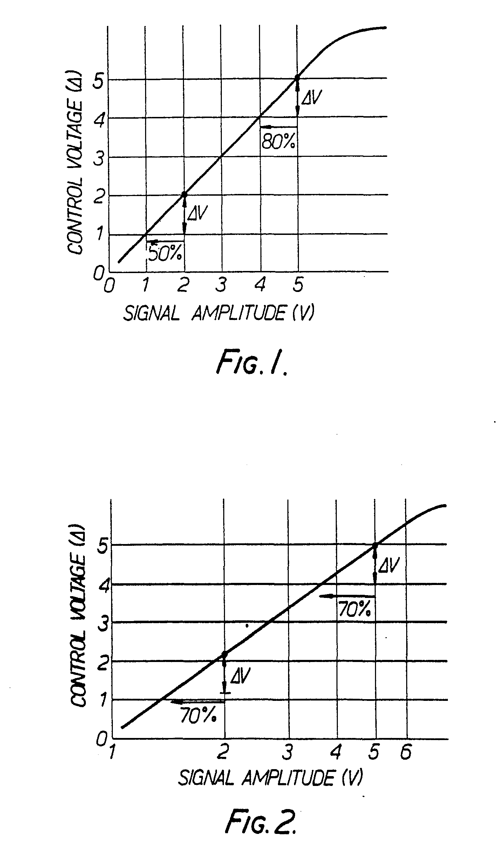

Conventionally, the video disc reproducing apparatus operating in accordance with the electrostatic capacitance detection system, rotates a video disc while contacting the surface thereof with a pickup stylus. Particles may enter between the disc and the stylus. As a result, the reproduced output signal picked up by the pickup is reduced thereby creating a problem of a deteriorating signal-to-noise ratio. For preventing the deterioration of the reproduced signal caused by the dust, it has been found that one effective remedy is to increase the pressure of the stylus when dust sticks to its point. Furthermore, it has been found from recent research that the amplitude of the reproduced output signal begins to reduce when dust begins to stick to the stylus point so that the amplitude drops as the dust accumulates, and if the stylus pressure is slightly increased as the dust accumulates, the dust is easily removable and thereafter it is difficult for dust to accumulate. Also it has been found that by controlling the stylus pressure as a function of the amplitude of reproduced signal the removal of dust may be effected. However, the stylus pressure, when controlled by a control voltage proportional merely to the amplitude of reproduced signal, leads to a change due to disparities in the amplitude of reproduced signal. In other words, variations in the disc or pickup stylus will cause disparities in the reproduced signal, which will result in changes in the stylus pressure. This disadvantage will be more apparent from consideration of Fig. 1, in which the abscissa represents the reproduced signal amplitude and the ordinate represents the control voltage proportional thereto. Now, assuming that the signal amplitude should be 5V and is lowered by the effects of dust so that the control voltage drops only by ΔV, this means that the reproduced signal amplitude at that time lowers by say 20% from 5V to 4V. However, for example, when using a poor disc having a reproduced signal amplitude of 2V, and the same effect of dust ΔV, the output signal must be lowered by 50% from 2V to 1V to achieve the same control voltage drop. In brief, since a rate of change differs with respect to the constant value of control voltage, the reproduced signal is not usable for controlling stylus pressure.

GB 2073934A discloses a video disc player of the type having a signal pickup stylus engaging a disc record for recovering prerecorded information signals. An electro-mechanical transducer is arranged to cooperate with the signal pickup stylus to regulate the bearing pressure between the stylus and the disc in response to the detected (21—23) signal strength of the recovered signal. Stylus wear is reduced by adjusting the pressure so that a desired signal strength is achieved.

The present invention provides a video disc reproducing apparatus comprising:
a pickup means for reproducing information recorded on a recording disc as a variation in electrostatic capacitance, said pickup means having a pickup stylus;
a pickup stylus pressure control means for controlling the pressure of said pickup stylus on the disc; and
a control signal generator which generates a control signal supplied to said pickup stylus pressure control means, the pressure being increased in response to lowering of the level of the reproduced signal amplitude, characterised in that, said control signal is generated in proportion to a logarithm of the amplitude of the reproduced signal.

The apparatus has the advantage that it effectively prevents the signal-to-noise ratio from deterioration caused by dust between the video disc and the pickup without deteriorating the quality of the reproduced signal, which may be a video, sound or tracking signal.

Further, the apparatus is capable of effectively controlling the pressure in spite of the existence of disparities in the reproduced output signal when information relating thereto controls the pickup pressure.

Preferably, the pressure control and an automatic gain control (AGC) are arranged to maintain the reproduced output signal constant.

In order that the present invention will be more readily understood, embodiments thereof will now be described by way of example with reference to the accompanying drawings, in which:

Fig. 1 is a graph of characteristics of signal amplitude and control voltage according to a previous proposal;

Fig. 2 is a graph similar to Fig. 1, but according to the present invention;

Fig. 3 is a block diagrammatic representation of a first embodiment of a video disc reproducing apparatus according to the invention;

Fig. 4 is a block diagram of the principal portion of a modification to the first embodiment of the invention;

Fig. 5 is a circuit diagram of an example of a logarithmic converter used in this invention;

Fig. 6 is a block diagram useful to explain the principle of the invention;

Fig. 7 is a block diagram of the principal portion of another modified embodiment of the invention, and

Fig. 8 is a circuit diagram showing the principal portion of the Fig. 7 embodiment.

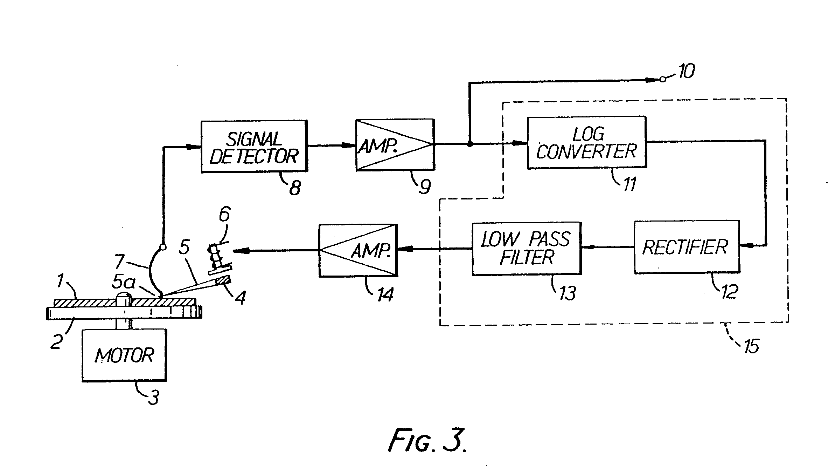

Referring to Fig. 2, the principle of this invention is shown and then an embodiment of the invention will be described with reference to Figs. 3 to 5. An example of the characteristic of control voltage generation used in this invention is shown in Fig. 2, in which the abscissa represents logarithmic scales and the ordinate linear scales. In this case, a change of signal amplitude with respect to a change ΔV of control voltage, even in the vicinity of 5V or 2V of signal amplitude, represents a change of about 70% in signal amplitude. This means that when the control voltage is generated in proportion to a logarithm of signal amplitude, the rate of change of signal amplitude is constant with respect to a variation in control voltage. When controlling the stylus pressure for a video disc apparatus, such control voltage, when in use, can control the pressure corresponding to a percentage of lowering signal amplitude regardless of the output signal level, thereby obtaining the desired performance.

Referring to Fig. 3, a video disc 1 is placed on a turntable 2 rotatably driven by a motor 3. Information is recorded as a change in electrostatic capacitance by means of engraved portions on the video disc 1 and is reproduced by a pickup stylus 5a attached to the tip of a pickup means 5. The reproduced signal is fed to a signal detector 8 by a flying lead 7, and the signal detector 8 converts the electrostatic capacity change into an electric signal which is fed to a head amplifier 9. An electromagnet 6 for controlling the needle pressure is disposed at a fixing portion in the vicinity of a magnet 4 provided on the pickup means 5, these magnets constituting a stylus pressure control means. The electromagnet 6 includes a coil and the position of the magnet 4 is controlled corresponding to a current flowing in the coil so that the pressure of pickup stylus 5a with respect to the video disc 1 is controlled. An output of head amplifier 9 is fed to a terminal 10 and thence to a signal processing circuit (not shown) and also fed to a logarithmic converter 11 which constitutes together with a rectifier 12 and a low-pass filter 13, a control signal generating means 15 to be discussed below. The logarithmic converter 11 generates a signal proportional to the logarithm of amplitude of the output from head amplifier 9, i.e., the reproduced signal from the video disc 1. The logarithmically transformed signal is rectified by the rectifier 12 and smoothed by the low-pass filter 13 so as to form a control voltage, the low-pass filter 13 having its time constant set to a suitable value for the pressure control. The control voltage obtained from the low-pass filter 13 is fed to the electromagnet 6 through a pressure coil driving amplifier 14. The pressure coil driving amplifier 14 alternatively may be included in the pressure control means comprising the magnet 4 and electromagnet 6.

Such a construction, when dust is present between the video disc 1 and the pickup needle 5a, can detect the reduction of the reproduced signal and control the stylus pressure such that the stylus pressure rises to remove the dust, resulting in a reproduced signal of constant value being obtained from the terminal 10. Since the control signal is proportional to the logarithm of amplitude of the reproduced signal, the amount of stylus pressure control with respect to a ratio of level-lowering of the reproduced signal, even when the output signal changes due to disparities in the video disc 1 and/or pickup stylus 5a, is the same as abovementioned.

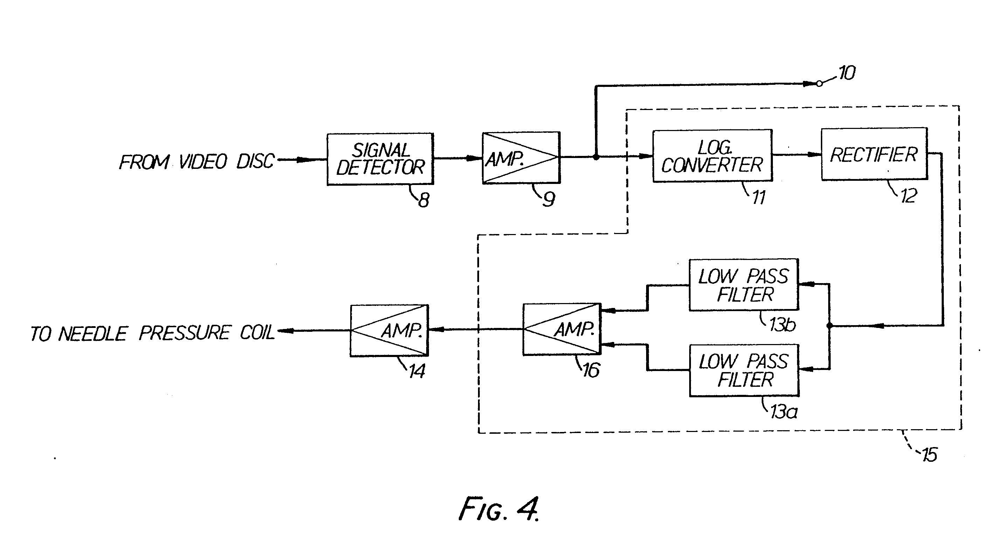

Figure 4 shows a modification of the control signal generating means 15 in that the output signal from the rectifier 12 is fed to first and second low-pass filters 13a and 13b which are connected in parallel. The outputs from the filters are fed to a differential amplifier 16, and the output thereof is used as the control signal fed to the amplifier 14. In the Fig. 4 modification, the time constant is selected to be large for the first low-pass filter 13a and relatively smaller for the second low-pass filter 13b. In other words, the output of first low-pass filter 13a is an average reproduced signal output and that of second low-pass filter 13b is an instantaneous reproduced signal output. With this arrangement, the instantaneous output, when lower than the average value, is detected by the differential amplifier 16. Accordingly, when the instantaneous reproduced output has a signal level lower than the average reproduced output level because of dust or the like, a control voltage corresponding to the output of lower level is obtained. This modification functions to increase the stylus pressure using a logarithmic converter 11 which effectively operates in the same way as in the Fig. 3 embodiment.

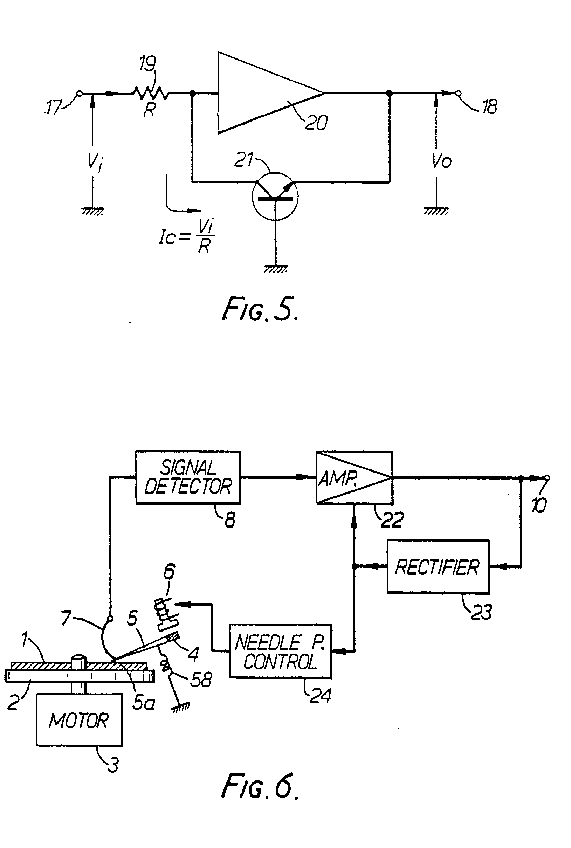

Referring to Fig. 5, the logarithmic converter 11 used in this invention is so constructed that the collector-emitter line of a grounded base transistor 21 is connected across an input terminal and an output terminal of an operational amplifier 20 so that the transistor 21 is used as a logarithmic transformation element. When the signal amplitude supplied to the input terminal 17 is represented by Vi, the collector current Ic of the transistor 21 is determined by Vi and a resistance value R of an input resistance 19, such that

$$Ic = \frac{Vi}{R}.$$

Voltage $V_{BE}$ across the emitter and the collector of the transistor 21 is given generally by the following equation:

$$V_{BE} \fallingdotseq \frac{kt}{q} \ln \frac{Ic}{Io} \qquad (1)$$

where
   k: Boltzmann constant,
   T: absolute temperature,
   q: charge of electron, and
   Io: reverse-direction saturation current.

Signal amplitude Vo obtained at the output terminal 18 is equal to $V_{BE}$. Therefore, the following equation holds:

$$Vo \fallingdotseq a \log Vi + b \qquad (2)$$

where a and b are constants. Hence, the output amplitude is proportional to the logarithm of input amplitude.

In the above embodiment, rectification takes place after logarithmic transformation, but the same effect of course is obtainable by logarithmic transformation after rectification.

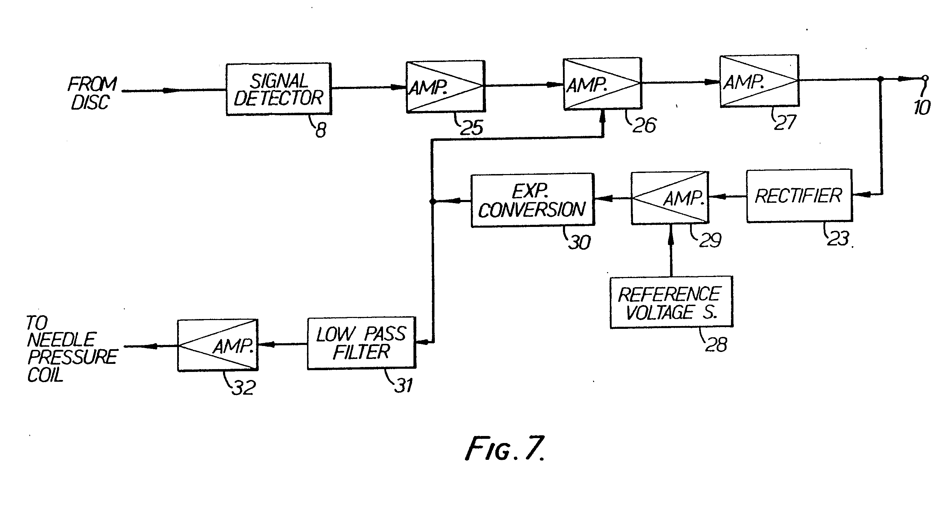

Next, explanation will be given on another embodiment with reference to Figures 6 to 8.

As seen from the above, control of the pressure of the pickup stylus is effected in such a manner that the stylus pressure creates a predetermined variation when the reproduced signal level varies at a fixed percentage, and has no direct relation to the magnitude of reproduced signal level caused by disparities in the disc or pickup stylus. For this purpose, the stylus pressure need only be controlled by a control voltage proportional to the logarithm of input signal amplitude.

On the other hand, since the reproduced signal output level should be as constant as possible for convenience for subsequent signal processing, it is desirable that an automatic gain control (AGC) generally maintains the reproduced signal output constant. This results in the problem that when the aforesaid needle pressure control and automatic gain control are performed independently, the circuitry becomes complex and the number of pins increases when the circuit is made as an integrated circuit.

This embodiment is intended to solve the above problem, and is so constructed that the automatic gain control for maintaining constant the reproduced signal output from the video disc and the pickup stylus pressure control, are controllable on a basis of the same information.

Referring now to Fig. 6, a video disc 1 is placed on a turntable 2 rotatably driven by a motor 3 so that variations in electrostatic capacitance is picked up by a pickup stylus 5a at the tip of pickup means 5 and fed to a signal detector 8 by a flying lead 7, the detector 8 converting the electrostatic capacitance signal into an electric signal and feeding the electric signal to a head amplifier 22.

The pickup means 5 carries a magnet 4, and an electromagnet 6 for stylus pressure control is disposed and fixed in position in the vicinity of magnet 4. A coil is wound onto the electromagnet 6 and the position of the magnet 4 is controlled corresponding to a current flowing in the coil so that the pickup stylus 5a pressure may be controlled. The output of the head amplifier 22 is fed to the output terminal 10 for transmission to a signal processing circuit (not shown). Here, the head amplifier 22 serves as a variable gain amplifier, whose gain is controlled by the voltage obtained by rectifying in a rectifier circuit 23 the signal fed to the output terminal 10, so that even when the input signal level from the signal detector 8 varies, the amplitude of the output signal to be obtained at the output terminal 10 remains constant. In other words, the head amplifier 22 and the rectifier circuit 23 constitute an automatic gain control means, wherein the output of the rectifier circuit 23, which is in fact the gain control signal for the head amplifier 22, has a voltage corresponding to the amplitude of the signal reproduced from the video disc 1. Namely, when the input signal is larger, the gain control voltage becomes larger to lower the gain, and conversely, when the input signal is smaller, the gain control voltage becomes smaller to raise the gain. By this means the output signal obtained from the output terminal 10 is maintained at a constant level.

Since the AGC gain control voltage as abovementioned corresponds to the level of the signal reproduced from the video disc 1, this control voltage is fed to a stylus pressure control system 24 to control the electromagnet 6 and thereby provide proper stylus pressure control. For example, when there is dust between the video disc 1 and the pickup stylus 5a, the output is reduced and the gain control voltage becomes smaller. The pickup 5 is biased by a spring 58 and the electromagnet 6 is driven by a signal corresponding to the gain control voltage in a direction to counteract the spring force to increase the pressure of pickup stylus 5a to thereby remove the dust. As a result, a stable reproduced signal output is obtained. This embodiment has the advantage in that no deterioration occurs in the S/N ratio in comparison with the use solely of an automatic gain control.

Figure 7 shows in more detail the construction of the AGC and stylus pressure control system, in which the signal output from the signal detector 8, which has a low level, is amplified by a preamplifier 25 and fed to a variable gain amplifier 26 the gain of which is controlled by the gain control voltage output from an exponential conversion circuit 30. The output signal from the amplifier 26 is fed to the output terminal 10 through an output amplifier 27 and thence to the signal processing system (not shown). A part of the output signal from the output amplifier 27 is fed to the rectifier circuit 23 and converted into a DC voltage corresponding to the output signal amplitude and then supplied to an error amplifier 29. The error amplifier 29 is provided with a reference voltage from a reference voltage source 28, to provide a voltage difference between the reference voltage and the DC component corresponding to the former output signal amplitude. In other words, a DC voltage corresponding to an error with respect to a predetermined reference amplitude is obtained, the error voltage being fed to an exponential converter circuit 30 to obtain a gain control voltage proportional to the exponent of the error signal.

As abovementioned, elimination of the influence of dust between the video disc and the pickup stylus is effected by increasing the stylus pressure in proportion to the logarithm of the reduction in magnitude of the reproduced signal from the pickup stylus. Accordingly, this embodiment is so constructed that the gain control voltage Vc is set to the time constant through a low-pass filter 31 and then fed to a stylus pressure coil driving amplifier 32, thereby controlling the pickup stylus 5a pressure.

Such construction enables a stable output signal of constant level to be obtained from the output terminal 10 thereby improving the picture quality and sound quality reproduced from the video disc. Furthermore, the same control signal (voltage) generating unit can be used for AGC and stylus pressure control, whereby not only is the circuit constitution simple but also the number of pins of an integrated circuit is effectively reduced.

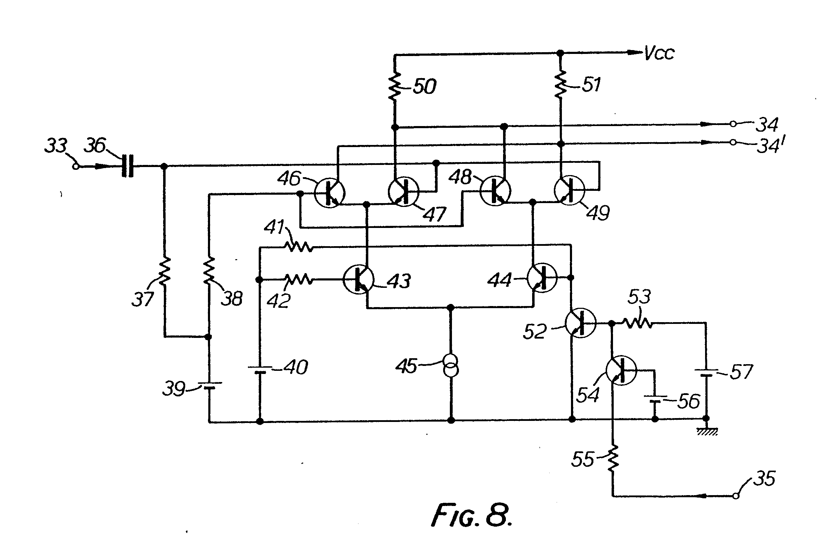

Next, the construction of the variable gain amplifier and the exponential conversion circuit used in Fig. 7 is shown of the circuit diagram of Fig. 8, in which an input terminal 33 is provided with a signal obtained from the signal detector 8, which signal is applied to the bases of transistors 47 and 49 through a capacitor 36. The bases of transistors 46 and 48 are given a bias from a voltage source 39 through a resistor 38, and the bases of transistors 47 and 49 are similarly biased through a resistor 37. Resistors 50 and 51 are load resistors in the collector circuits of transistors 47, 49 from which the outputs are obtained across the output terminals 34 and 34'. Transistors 43, 44, 46, 47, 48 and 49 constitute a double-balanced modulator circuit, in which a signal applied to the input terminal 33 is amplified by a gain proportional to the difference in voltage between the bases of transistors 43 and 44, and outputted from the output terminals 34 and 34'. Reference numeral 45 designates a constant current source, and resistors 42 and 41 are bias resistors for feeding equal bias from a voltage source 40 to the bases of transistors 43 and 44 respectively. A transistor 52 is for exponential transformation, and its collector is connected to the base of transistor 44. The base of transistor 52 is connected to a voltage source 57 through a resistor 53. A transistor 54 has its collector connected to the base of transistor 52, and its base connected to a constant voltage source 56 with the emitter of the transistor 54 being connected to a control terminal 35 through a resistor 55.

In the double-balanced modulator circuit, the transistors 43 and 44, when the transistor 52 is on, have an equal base voltage so that the gain is zero, but when a current flows in the transistor 52, the base bias to the transistors 43 and 44 is out of balance and thus increases the gain. In this case, the gain is proportional to the collector current of transistor 52, the collector current of transistor 54 being proportional to the voltage applied to the control terminal 35. Hence, the base voltage of transistor 52 is approximately inversely proportional to the voltage applied to the control terminal 35, and the collector current Ic of transistor 52 with respect to the base voltage (across the base and the emitter) thereof is given by the following equation:

$$I_c = I_o \left(1 - e^{\frac{qV_{BE}}{kT}}\right) \qquad (8),$$

where
    Io: saturation current in the reverse direction,
    q: electric charge of electron,
    k: Boltzmann constant, and
    T: absolute temperature.
Accordingly, Ic is approximately proportional to the exponent of $V_{BE}$, whereby the gain of the double-balanced modulator circuit changes in proportion to the exponent of the control voltage applied to the control terminal 35. Such a construction can realize the variable gain amplifier 26 and exponent conversion circuit 30 shown in Fig. 7.

As seen from the above, the embodiments of the invention result in the S/N ratio of the reproduced signal being free from deterioration so as to maintain high quality reproduction of the video audio signals. Furthermore, the circuitry is simple and integration of circuit is easy.

**Claims**

1. A video disc reproducing apparatus comprising:
    a pickup means (5) for reproducing information recorded on a recording disc (1) as a variation in electrostatic capacitance, said pickup means having a pickup stylus (5a);
    a pickup stylus pressure control means (4, 6) for controlling the pressure of said pickup stylus on the disc (1); and
    a control signal generator (15) which generates a control signal supplied to said pickup stylus pressure control means (4, 6), the pressure being increased in response to lowering of the level of the reproduced signal amplitude characterised in that, said control signal is generated in proportion to a logarithm of the amplitude of the reproduced signal.

2. A video disc reproducing apparatus according to claim 1, wherein said control signal generator (15) comprises: a logarithmic converter (11) which generates a voltage signal in proportion to the logarithm of said reproduced signal from said pickup means (5, 5a); a rectifier (12) for rectifying an output signal of said logarithmic converter (11); and a lowpass filter (13) for smoothing an output signal of said rectifier (12), an output signal of said lowpass filter (13) being applied to said pickup stylus pressure control means (4, 6) for controlling the pressure of said pickup stylus (5a).

3. A video disc reproducing apparatus according to claim 2, wherein: said lowpass filter (13) comprises a first lowpass filter (13a) and a second lowpass filter (13b) connected in parallel with each other, the time constant of said first lowpass filter being adapted to produce an average reproduced signal and the time constant of said second lowpass filter being adapted to produce an instantaneous reproduced signal and said apparatus further comprises a differential amplifier (16) which generates a differential signal in response to output signals from said first and second lowpass filters (13a, 13b) said differential signal being applied to said pickup stylus pressure control means (4, 6) for controlling the pressure of said pickup stylus (5a).

4. A video disc reproducing apparatus in accordance with claim 1, wherein there is further provided an automatic gain control for maintaining constant the reproduced signal output from the video disc, the automatic gain control and pickup stylus pressure control being controllable on a basis of the same information.

5. A video disc reproducing apparatus according to claim 1, wherein there is further provided an automatic gain control means (22, 23) for maintaining the reproduced signal output of the video disc said automatic gain control means (22, 23) comprises: a rectifier (23) for rectifying an output signal of said apparatus; a reference voltage source (28) for generating a reference signal; a differential amplifier (29) for generating an error signal between an output signal of said rectifier (23) and said reference signal; an exponential conversion means (30) for converting said error signal to an exponential error signal and a variable gain amplifier (26) for controlling said output signal of said apparatus according to said exponential error signal.

**Patentansprüche**

1. Bildplattenwiedergabegerät, enthaltend:
einen Abtaster (5) zum Wiedergeben von auf einer Aufzeichnungsplatte (1) aufgezeichneter Information als Schwankung elektrostatischer Kapazität, wobei der Abtaster einen Abtastgriffel (5a) enthält;
eine Abtastgriffeldrucksteuereinrichtung (4, 6) zum Steuern des Drucks des Abtastgriffels auf der Platte (1); und
einen Steuersignalgenerator (15), der ein Steuersignal erzeugt, das der Abtastgriffeldrucksteuereinrichtung (4, 6) zugeführt wird, wobei der Druck in Abhängigkeit vom Abnehmen des Pegels der wiedergegebenen Signalamplitude gesteigert wird, dadurch gekennzeichnet, daß das Steuersignal proportional zum Logarithmus der Amplitude des wiedergegebenen Signals erzeugt wird.

2. Bildplattenwiedergabegerät nach Anspruch 1, bei dem der Steuersignalgenerator (15) enthält: einen logarithmischen Wandler (11), der ein Spannungssignal proportional zum Logarithmus des von dem Abtaster (5, 5a) wiedergegebenen Signals erzeugt; einen Gleichrichter (12) zum Gleichrichten eines Ausgangssignals des logarithmischen Wandlers (11); und ein Tiefpaßfilter (13) zum Glätten eines Ausgangssignals des Gleichrichters (12), wobei ein Ausgangssignal des Tiefpaßfilters (13) der Abtastgriffeldrucksteuereinrichtung (4, 6) zugeführt wird, um den Druck des Abtastgriffels (5a) zu steuern.

3. Bildplattenwiedergabegerät nach Anspruch 2, bei dem: das Tiefpaßfilter (13) ein erstes Tiefpaßfilter (13a) und ein zweites Tiefpaßfilter (13b) enthält, die parallel zueinander geschaltet sind, wobei die Zeitkonstante des ersten Tiefpaßfilters so eingestellt ist, daß es ein mittleres Wiedergabesignal erzeugt, und die Zeitkonstante des zweiten Tiefpaßfilters so eingestellt ist, daß es ein augenblicklich wiedergegebenes Signal erzeugt, und
daß das Gerät weiterhin einen Differenzverstärker (16) enthält, der ein Differenzsignal in Abhängigkeit von den Ausgangssignalen der ersten und zweiten Tiefpaßfilter (13a, 13b) erzeugt, welches Differenzsignal der Abtastgriffeldrucksteuereinrichtung (4, 6) zugeführt ist, um den Druck des Abtastgriffels (5a) zu steuern.

4. Bildplattenwiedergabegerät nach Anspruch 1, bei dem weiterhin eine automatische Verstärkungsregelung zum Konstanthalten des von der Bildplatte wiedergegebenen Signalausgangs vorgesehen ist, wobei die automatische Verstärkungssteuerung und die Abtastgriffeldrucksteuerung auf einer Basis der gleichen Information steuerbar sind.

5. Bildplattenwiedergabegerät nach Anspruch 1, bei dem weiterhin eine automatische Verstärkungsregeleinrichtung (22, 23) zum Aufrechterhalten des von der Bildplatte wiedergegebenen Signalausgangs vorgesehen ist, welche automatische Verstärkungssteuereinrichtung (22, 23) enthält: einen Gleichrichter (23) zum Gleichrichten eines Ausgangssignals des Gerätes; eine Bezugssignalquelle (28) zum Erzeugen eines Bezugssignals; einen Differenzverstärker (29) zum Erzeugen eines Fehlersignals zwischen einem Ausgangssignal des Gleichrichters (23) und dem Bezugssignal; eine Exponentialwandlereinrichtung (30) zum Umwandeln des Fehlersignals in ein exponentielles Fehlersignal, und einen regelbaren Verstärker (26) zum Regeln des Ausgangssignals des Gerätes, in Übereinstimmung mit dem exponentiellen Fehlersignal.

**Revendications**

1. Appareil de reproduction de disque video comportant:
un lecteur 5 destiné à reproduire des informations enregistrées sur un disque d'enregistrement (1) sous forme de variations de capacité électrostatique, ledit lecteur comprenant un style de lecteur (5a);
un dispositif de commande de pression de style de lecteur (4, 6) destiné à commander la pression dudit style de lecteur sur le disque (1) et
un générateur de signal de commande (15) qui produit un signal de commande appliqué audit dispositif de commande de pression de style de lecteur (4, 6), la pression étant augmentée en réponse à un abaissement du niveau de l'amplitude du signal reproduit, caractérisé en ce que ledit signal de commande est produit en proportion du logarithme de l'amplitude du signal reproduit.

2. Appareil de reproduction de disque video selon la revendication 1, dans lequel ledit générateur de signal de commande (15) comporte:
un convertisseur logarithmique (11) qui produit un signal de tension en proportion du logarithme dudit signal reproduit par ledit lecteur (5, 5a);
un redresseur (12) qui redresse le signal de sortie dudit convertisseur logarithmique (11); et un filtre passe-bas (13) qui filtre le signal de sortie dudit redresseur (12), le signal de sortie dudit filtre passe-bas (13) étant appliqué audit dispositif de commande de pression de style de lecteur (4, 6) pour commander la pression dudit style de lecteur (5a).

3. Appareil de reproduction de disque video selon la revendication 2, dans lequel:

ledit filtre passe-bas (13) consiste en un premier filtre passe-bas (13a) et un second filtre passe-bas (13b) connectés en parallèle entre eux, la constante de temps dudit premier filtre passe-bas étant adaptée pour produire un signal reproduit moyen et la constante de temps dudit second filtre passe-bas étant adaptée pour produire un signal reproduit instantané et ledit appareil comportant en outre un amplificateur différentiel (16) qui produit un signal différentiel en réponse aux signaux de sortie dudit premier et dudit second filtre passe-bas (13a, 13b), ledit signal différentiel étant appliqué audit dispositif de commande de pression de style de lecteur (4, 6) pour commander la pression dudit style de lecteur (5a).

4. Appareil de reproduction de disque video selon la revendication 1, comportant en outre une commande automatique de gain pour maintenir constant le signal reproduit à partir du disque video, la commande automatique de gain et la commande de pression de style de lecteur pouvant être commandées sur la base des mêmes informations.

5. Appareil de reproduction de disque video selon la revendication 1, comportant en outre un dispositif de commande automatique de gain (22, 23) pour maintenir le signal de sortie émis à partir du disque video, ledit dispositif de commande automatique de gain (22, 23) comportant:

un redresseur 23, destiné à redresser le signal de sortie dudit appareil; une source de tension de référence (28) qui produit un signal de référence; un amplificateur différentiel (29) qui produit un signal d'erreur entre un signal de sortie dudit redresseur (23) et ledit signal de référence; un dispositif de conversion exponentielle (30) destiné à convertir ledit signal d'erreur en un signal d'erreur exponentielle et un amplificateur à gain variable (26) qui commande ledit signal de sortie dudit appareil en fonction dudit signal d'erreur exponentielle.

FIG. 1.

FIG. 2.

Fig. 3.

FIG. 4.

FROM VIDEO DISC → SIGNAL DETECTOR (8) → AMP. (9) → LOG. CONVERTER (11) → RECTIFIER (12)

10

LOW PASS FILTER (13b)

LOW PASS FILTER (13a)

AMP. (16) → AMP. (14) → TO NEEDLE PRESSURE COIL

15

3

0 089 197

*Fig.5.*

*Fig.6.*

0 089 197

FROM DISC → SIGNAL DETECTOR (8) → AMP. (25) → AMP. (26) → AMP. (27) → (10)

RECTIFIER (23) ← from (10); AMP. (29) ← RECTIFIER; EXP. CONVERSION (30) ← AMP.

REFERENCE VOLTAGE S. (28) → AMP. (29)

EXP. CONVERSION (30) → AMP. (26)

LOW PASS FILTER (31) → AMP. (32) → TO NEEDLE PRESSURE COIL

FIG. 7.

FIG. 8.

0 089 197